# EUROPÄISCHE PATENTSCHRIFT

(11) **EP 0 949 208 B1**
(45) Veröffentlichungstag und Bekanntmachung des Hinweises auf die Patenterteilung: **29.05.2002**
(21) Anmeldenummer: 99104737.4
(22) Anmeldetag: 10.03.1999
(51) Int. Cl.: C02F 3/10, B01J 19/32

(54) **Füllmaterial für Tropfkörper zur Behandlung von Fluiden sowie Verfahren zur Herstellung desselben**
Packing for fluid-treating trickling filters and process for manufacturing it
Garnissage de filtres biologiques pour le traitement de fluides et procéde pour sa fabrication

(30) Priorität: 20.03.1998 DE 19812361
(43) Veröffentlichungstag der Anmeldung: 13.10.1999
(73) Patentinhaber: Norddeutsche Seekabelwerke GmbH & Co. KG, 26954 Nordenham (DE)
(72) Erfinder: Bittner, Hans-Joachim, 26919 Brake (DE)
(74) Vertreter: Möller, Friedrich, Dipl.-Ing.

(56) Entgegenhaltungen:
- EP-A- 0 145 853

## Beschreibung

Die Erfindung betrifft ein Füllmaterial für Tropfkörper zur Behandlung von Fluiden, insbesondere zur biologischen Abwasserreinigung, gemäß dem Oberbegriff des Anspruchs 1. Weiterhin betrifft die Erfindung ein Verfahren zur Herstellung von Füllmaterial für Tropfkörper zur Behandlung von Fluiden gemäß dem Oberbegriff des Anspruchs 10.

Das hier angesprochene Füllmaterial wird überwiegend zur biologischen Behandlung von Flüssigkeiten und Gasen eingesetzt, insbesondere in der Abwassertechnik zur biologischen Reinigung von Abwasser. Hierzu wird auf den Streifen des Füllmaterials ein Bakterien enthaltender biologischer Rasen angesiedelt.

Aus der EP 0 274 633 B1 geht ein gattungsgemäßes Füllmaterial hervor, bei dem mehrere Lagen nebeneinanderliegender Streifen durch eine quer zur Längsrichtung derselben gerichteten Haltebahn miteinander verbunden sind. Das Füllmaterial ist mit herunterhängenden Streifen in vorzugsweise einem Behälter mit der zu behandelnden Flüssigkeit angeordnet. Die Streifen müssen so dimensioniert sein, daß diese infolge der Belastung durch das Gewicht des biologischen Rasens sich nicht zu sehr dehnen oder sogar reißen.

Ein weiterentwickeltes Füllmaterial ist aus der EP 0 332 907 B1 bekannt. Hier sind den Streifen in Längsrichtung derselben verlaufende zugaufnehmende Stränge zugeordnet. Dadurch kann die Zugfestigkeit der Streifen erhöht werden. Einer derartigen Erhöhung der Festigkeit der Streifen sind allerdings auch Grenzen gesetzt.

Hiervon ausgehend liegt der Erfindung die Aufgabe zugrunde, ein streifenförmiges Füllmaterial zur Behandlung von Fluiden hinsichtlich der Zugfestigkeit der Streifen zu verbessern. Weiterhin betrifft die Erfindung ein Verfahren zur einfachen Herstellung des Füllmaterials.

Zur Lösung dieser Aufgabe weist das erfindungsgemäße Füllmaterial die Merkmale des Anspruchs 1 auf. Durch die Verstärkung der zugaufnehmenden Stränge wird eine Erhöhung der Zugfestigkeit erreicht. Dadurch kann die Länge der Streifen des Füllkörpers vergrößert werden. Bei entsprechender Ausbildung der Verstärkungen kann weiterhin erreicht werden, daß bei Zugbelastung der Streifen eine Verwindung derselben erfolgt, wodurch ein Verkleben benachbarter Streifen vermieden wird und die Ausbildung von Strömungskanälen zwischen benachbarten Streifen verbessert wird.

Als besonders vorteilhaft hat es sich erwiesen, die Verstärkung im Inneren des zugaufnehmenden Stranges anzuordnen. Die Verstärkung tritt also nicht in Kontakt mit der Umgebung und ist somit gegenüber Beschädigungen geschützt. Gleichzeitig werden durch die Anordnung der Verstärkung im Inneren des Strangs an das die Verstärkung bildende Material keine Anforderungen hinsichtlich einer guten Ansiedlung des Bewuchses gestellt.

Gemäß einer bevorzugten Ausgestaltung der Erfindung ist die Verstärkung gebildet aus mindestens einem Verstärkungsstrang. Dieser Verstärkungsstrang ist von einer Umhüllung umgeben. Der zugaufnehmende Strang wird somit gebildet aus Verstärkungsstrang und der Umhüllung. Es ist aber auch denkbar, den zugaufnehmenden Strang aus mehreren Verstärkungssträngen zu bilden, die von einer gemeinsamen Umhüllung umgeben sind. Die Umhüllung schützt den oder jeden Verstärkungsstrang vor insbesondere mechanischen Beanspruchungen. Vor allem aber dient die Umhüllung zur leichten Verbindung des zugaufnehmenden Strangs mit den jeweiligen Streifen, weil die Umhüllung aus einem Material gebildet sein kann, das sich problemlos mit den Streifen verbinden läßt. Vorzugsweise bestehen Umhüllungen und Streifen aus dem gleichen Material. Die Verbindung kann dann durch Verschweißen, Versiegeln oder dergleichen erfolgen.

Zweckmäßigerweise sind der Verstärkungsstrang und die Umhüllung kreisförmig ausgebildet. Der Verstärkungsstrang verfügt über ein zylinderförmigen Querschnitt, während die Umhüllung ein kreisringförmigen Querschnitt aufweist. Die Wandstärke der Umhüllung ist somit ringsum den Verstärkungssträngen etwa gleich groß. Dies hat zur Folge, daß der Verstärkungsstrang ringsherum von einer gleich dicken Umhüllung umgeben ist. Die Wandstärke der Umhüllung kann so bemessen sein, daß sie etwa dem Durchmesser des Verstärkungsstrangs entspricht.

Nach einem weiteren Vorschlag der Erfindung wird der Verstärkungsstrang aus einem hochzugfestem Material gebildet, vorzugsweise aus einem Kohle- oder Glasfaserstrang oder einem Bündel aus Kohle- oder Glasfasersträngen.

Vorzugsweise besteht die Umhüllung mindestens teilweise aus einem schaumförmigen Material, beispielsweise aus geschäumtem Polyäthylen. Die Ummantelung wird hierbei auf den Verstärkungsstrang aufgeschäumt. Bei geringem Materialeinsatz und kleiner Masse der Umhüllung kann auf diese Weise eine große Querschnittsfläche erstellt werden. Hierdurch kann beispielsweise die (Biege-) Steifigkeit und Festigkeit verbessert werden. Zusätzlich kann die Kontaktfläche der Umhüllung mit dem Medium und/oder der Abstand des Verstärkungsstrangs von den Streifen vergrößert werden. Bei geschäumter Umhüllung kann sich beim Aushärten weiterhin eine geschlossene Außenfläche der Umhüllung ergeben, die auf einfache Weise mit den Streifen verbindbar ist.

Das erfindungsgemäße Verfahren weist die Merkmale des Anspruchs 10 auf. Das Extrusionsverfahren ermöglicht eine einfache Herstellung der Ummantelung um den hochzugfesten, fadenförmigen Verstärkungsstrang. Die so hergestellten Stränge können als Halbzeug in abgekühltem Zustand einer Materialbahn zur Bildung der Streifen oder werden Streifen zugeführt und hiermit verbunden werden. Alternativ können noch nicht vollständig abgekühlte Stränge auf die Materialbahn oder die Streifen aufgesiegelt werden.

Vorteilhafte Weiterbildungen der Erfindung ergeben sich aus den Unteransprüchen und der Beschreibung.

Nachfolgend werden bevorzugte Ausführungsbeispiele der Erfindung anhand der Zeichnungen näher erläutert. In den Zeichnungen zeigen:
- Fig. 1: eine Seitenansicht eines Behälters mit hängend in diesem angeordneten Füllmaterial,
- Fig. 2: eine Draufsicht auf das ausgebreitete Füllmaterial gemäß Fig. 1,

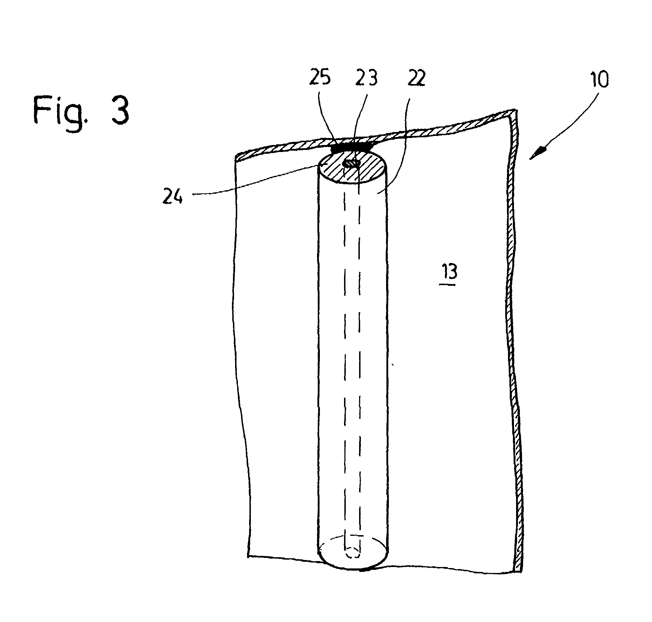

- Fig. 3: eine vergrößert dargestellte flächige Ansicht eines Abschnitts eines einzelnen Streifens,
- Fig. 4: einen vergrößert dargestellten Querschnitt des Streifens der Fig. 3, und
- Fig. 5: eine schematische Darstellung einer Vorrichtung zur Herstellung des Füllmaterials.

Das in den Figuren gezeigte Füllmaterial dient zur Bildung eines Tropfkörpers zur biologischen Abwasserbehandlung. Hierzu wird das Füllmaterial 10 hängend in einem Behälter 11 mit dem zu reinigenden Abwasser 12 angeordnet, vorzugsweise bei Relativbewegung des Abwassers gegenüber dem Füllmaterial 10.

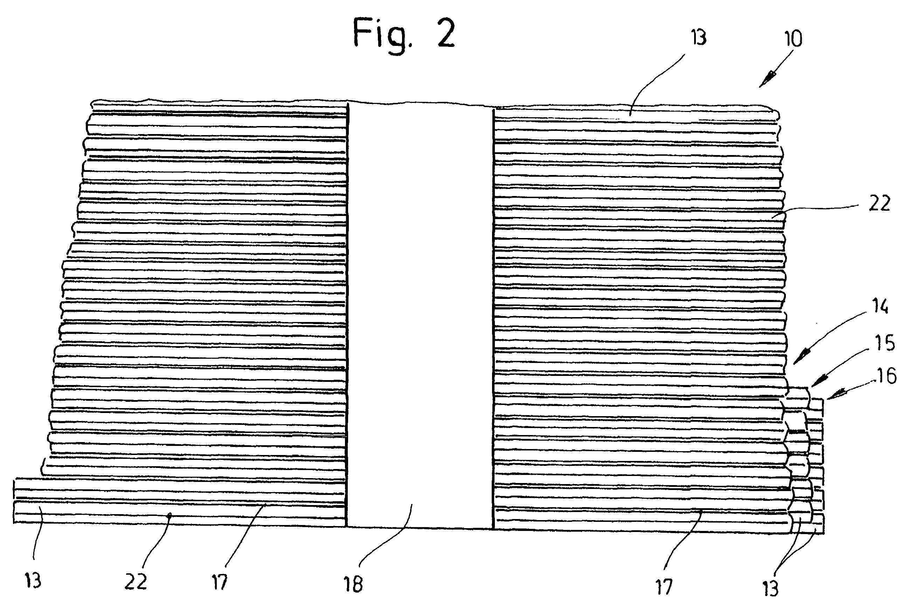

Die Fig. 2 zeigt das aus einer Vielzahl von Streifen 13 und einer Haltebahn 18 gebildete Füllmaterial 10 in einem ausgebreiteten Zustand. Die Streifen 13 und die Haltebahn 18 bestehen aus einem thermoplastischen Kunststoff, vorzugsweise aus Polypropylen oder Polyäthylen. Das hier gezeigte Füllmaterial ist aus mehreren Lagen 14, 15, 16 mit jeweils mehreren Streifen 13 konstanter Breite gebildet. Die Streifen 13 jeder Lage 14, 15 und 16 verlaufen parallel zueinander unter Ausbildung kleiner Zwischenräume 17 zwischen benachbarten Streifen 13. Die Streifen 13 jeder Lage 14, 15 und 16 können aus einer entsprechenden Folienbahn gebildet sein. Die Lagen 14, 15 und 16 sind untereinander und durch die quer zur Längserstreckung der Streifen 13 verlaufende Haltebahn 18 miteinander verbunden. Dabei erstrecken sich die Streifen 13 zu beiden Seiten der Haltebahn 18, und zwar derart, daß die Streifen 13 jeder Lage 14, 15 und 16 auf beiden Seiten der Haltebahn 18 über eine etwa gleiche Länge verfügen. Alternativ ist es denkbar, das Füllmaterial 10 aus Streifen 13 zu bilden, die nur in einer einzigen Lage angeordnet sind. Es ist auch denkbar, zwei oder mehr als drei Lagen zur Bildung der Streifen 13 des Füllmaterials 10 zu verwenden.

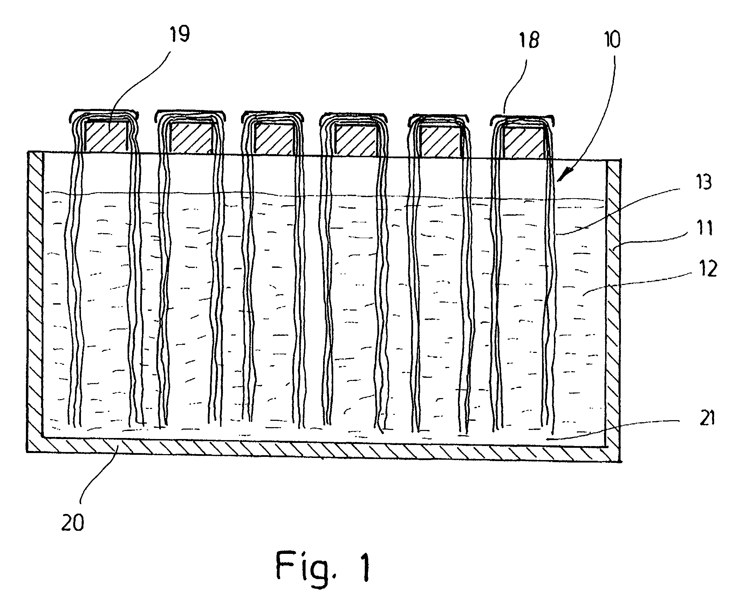

Aus der Fig. 1 ist ersichtlich, daß sich über dem Behälter 11 mehrere mit Abstand zueinander angeordnete Tragbalken 19 angeordnet sind. Das Füllmaterial 10 ist U-förmig über die Tragbalken 19 herübergelegt, und zwar mit der Haltebahn 18. Die Haltebahn 18 deckt dadurch die Oberfläche des jeweiligen Tragbalkens 19 mindestens teilweise ab. Die auf beiden Seiten gegenüber der Haltebahn 18 sich erstreckenden Streifen 13 hängen an gegenüberliegenden Seiten von dem jeweiligen Tragbalken 19 herab. Dementsprechend tauchen die Streifen 13 senkrecht in das Abwasser 12 im Behälter 11 ein. Die Länge der Streifen 13 ist derart bemessen, daß die Enden der Streifen 13 einen Bodenbereich 20 des Behälters nicht berühren. Es bildet sich dadurch zwischen dem Bodenbereich 20 und den Enden der Streifen 13 ein Spalt 21 aus.

Auf den Streifen 13 ist ein sogenannter biologischer Rasen angesiedelt, der die biologische Reinigung des Abwassers 12 herbeiführt. Hierbei kommt es vorwiegend auf eine große Kontaktfläche des Füllmaterials 10, nämlich der Streifen 13, mit dem zu reinigenden Abwasser 12 an. Außerdem muß ein Zusammenkleben benachbarter Streifen 13 vermieden werden. Dieses erfolgt beispielsweise dadurch, daß die frei herunterhängenden Streifen 13 mindestens teilweise verdrillt sind, so daß sich zwischen benachbarten Streifen 13 Strömungskanäle ausbilden können.

Jeder Streifen 13 ist mit mindestens einem zugaufnehmenden Strang 22 versehen. Der Strang 22 ist vorzugsweise in Richtung der Längserstreckung des jeweiligen Streifens 13 orientiert. Der betreffende Strang 22 ist mittig oder gegebenenfalls auch außermittig auf einer Seite des jeweiligen Streifens 13 befestigt.

Die zugaufnehmenden Stränge 22 erstrecken sich vorzugsweise über die gesamte Länge der Streifen 13, also bis hin zu ihren (Umfangs-)Enden. Es ist auch denkbar, die zugaufnehmenden Stränge 22 etwas kürzer als die Streifen 13 auszubilden, und zwar derart, daß die Stränge 22 mit einem Abstand vor den freien unteren Enden der Streifen 13 enden. Dieses beruht auf der Erkenntnis, daß die Zugbelastung der Streifen 13 zu den Enden derselben abnimmt. Es besteht deshalb nicht die Gefahr, daß kurze, untere Endbereiche der Streifen 13, die nicht durch Stränge 22 verstärkt sind, sich übermäßig dehnen oder sogar reißen.

Jeder Strang 22 wird gebildet aus einem Verstärkungsstrang 23 und einer Umhüllung 24. Der Verstärkungsstrang 23 besteht aus einem hochzugfestem Material, vorzugsweise aus einem einzigen Kohle- oder Glasfaserstrang oder einem Bündel aus Kohle-, Glasfasern oder dergleichen, die sich vor allem durch eine hohe Festigkeit und niedrige Dehnung auszeichnen. Der aus einzelnen Fasern oder ein Faserbündel, die gegebenenfalls auch verflochten sein können, gebildete Verstärkungsstrang 23 verfügt über ein im wesentlichen kreisförmigen Querschnitt. Um den Verstärkungsstrang 23 ist konzentrisch die Umhüllung 24 angeordnet. Die Umhüllung besteht aus einem thermoplastischen Kunststoff, und zwar vorzugsweise Polypropylen oder Polyäthylen. Die Umhüllung kann als kompaktes Kunststoffmaterial ausgeführt sein oder aus einem geschäumten Material, vorzugsweise Polyäthylen. Das geschäumte Material kann weiterhin eine kompakte Außenfläche aufweisen, so daß nur zwischen der Außenfläche und dem Verstärkungsstrang geschäumtes Material angeordnet ist. Beim bevorzugten Ausführungsbeispiel der Erfindung bestehen die Streifen 13 und die Umhüllungen 24 aus dem gleichen thermoplastischen Kunststoff, also z.B. Polypropylen oder Polyäthylen.

Die Umhüllung 24 verfügt über einen kreisringförmigen Querschnitt. Die zugaufnehmenden Stränge 22 verfügen dadurch über eine zylinderförmige Gestalt. Außerdem führt die kreisrinförmige Ausbildung der Umhüllung 24 dazu, daß der Verstärkungsstrang 23 ringsherum gleichmäßig mit einem thermoplastischen Kunststoff gleicher Wandstärke umhüllt ist.

Die Wandstärke der Umhüllung liegt im Bereich zwischen einem halben und einem ganzen Durchmesser des Verstärkungsstrangs 23. Die Umhüllung 24 kann somit eine Dicke aufweisen, die dem Durchmesser des Verstärkungsstrangs 23 entspricht, aber auch dünner sein, nämlich gegebenenfalls nur den halben Durchmesser des Verstärkungsstrangs 23 aufweist.

Jeder Strang 22 ist über die Umhüllung 24 mit dem jeweiligen Streifen 13 verbunden. Dies geschieht über eine Verbindung 25 im Kontaktbereich der Umhüllung 24 mit dem jeweiligen Streifen 13, und zwar durch Schweißen, Kleben und/oder Versiegeln. Diese Art der Verbindung des Strangs 22 mit dem entsprechenden Streifen 13 wird dadurch begünstigt, daß die Umhüllung 24 und der Streifen 13 aus einem thermoplastischen Kunststoff bestehen, vorzugsweise aus dem gleichem Kunststoff.

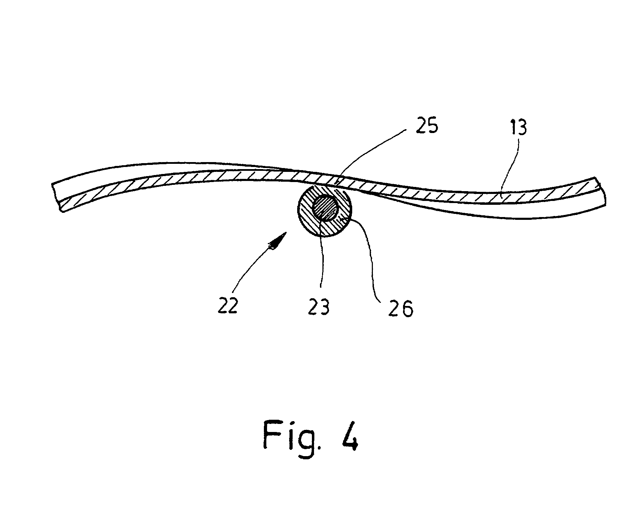

Fig. 4 zeigt, daß infolge der Verbindung des Strangs 22 mit dem Streifen 13 im Bereich der Verbindung 25 eine bereichsweise Abflachung der Umhüllung 24 entsteht. Dadurch kommt eine ausreichend große Verbindungsfläche einer zuverlässigen Verbindung des Strangs 22 mit den Streifen 13 zustande. Infolge einer entsprechenden Wandstärke der Umhüllung 24 ist sichergestellt, daß aufgrund der Abflachung an der Stelle der Verbindung 25 der Verstärkungsstrang 23 noch vollständig von der Umhüllung 24 ummantelt ist. Die Wandstärke der Umhüllung 24 ist lediglich im Bereich der Verbindung 25 etwas geringer.

Insbesondere im Falle des Aufsiegelns der Strangs 22 auf die jeweiligen Streifen 13 kann durch den Kontakt der entsprechenden Siegelbacken mit der Außenseite der Umhüllung 24 auch die der Abflachung im Bereich der Verbindung 25 gegenüberliegende Seite der Umhüllung 24 an eine in den Figuren nicht gezeigte Abflachung aufweisen. Diese Abflachung entspricht etwa der Abflachung im Bereich der Verbindung 25. Dadurch ist sichergestellt, daß auch im Bereich der zusätzlichen, äußeren Abflachung der Verstärkungsstrang 23 eine ausreichend dicke Einbettung Verstärkungsstrangs vorhanden ist.

Es ist denkbar, mehrere Stränge 22 mit einem Streifen 13 zu verbinden. Sind zwei Stränge 22 vorgesehen, sind diese zweckmäßigerweise auf den gegenüberliegenden Seiten des jeweiligen Streifens 13 angeordnet, und zwar vorzugsweise mittig. Sind mehr als zwei Stränge 22 einem Streifen 13 zugeordnet, können sich diese ganz oder teilweise außermittig befinden; aber auch versetzt sein.

Durch die Verstärkung der Stränge 22 kann die Dicke der Streifen 13, aber auch der Stränge (gegenüber unverstärkter Stränge) verringert werden, so daß für dieFolien mit einer Stärke von unter 20µm zum Einsatz kommen können. Des weiteren wird durch die Verstärkungsstränge 23 in den zugaufnehmenden Strängen 22 die Möglichkeit geschaffen, die Streifen 13 länger auszubilden, weil diese durch die Verstärkungsstränge 23 eine größere Zugfestigkeit erhalten. Außerdem führen die verstärkten Stränge 22 dazu, daß die damit verbundenen Streifen 13 sich weniger dehnen. Der Spalt 21 zwischen den Enden der Streifen 13 und dem Bodenbereich 20 des Behälters 11 kann dadurch verhältnismäßig schmal bemessen sein, ohne das die Gefahr besteht, daß die Enden der Streifen 13 den Bodenbereich 20 des Behälters 11 berühren. Das führt zu einer Verbesserung der Wirksamkeit der mit dem erfindungsgemäßen Füllmaterial 10 bestückten Anlage zur biologischen Reinigung von Abwasser.

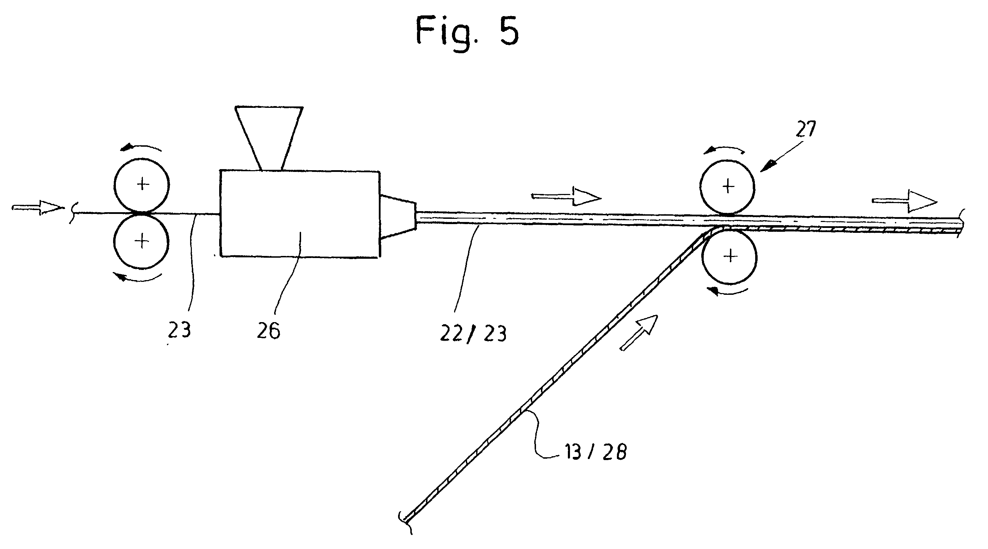

Das Verfahren zur Herstellung des erfindungsgemäßen Füllmaterials ist in Fig. 5 dargestellt. Der Verstärkungsstrang 23 wird einem Extruder 26 zugeführt, in dem der Verstärkungsstrang 23 (fortlaufend) mit einer Umhüllung 24 versehen wird. In einer alternativen Ausführungsform können in einem oder mehreren Extrudern 26 gleichzeitig mehrere Verstärkungen 23 mit Umhüllungen 24 versehen werden. Mindestens ein derart hergestellter Strang 22 wird im noch nicht ausgekühlten, Zustand im Bereich eines Verbindungsorgans 27 in Kontakt mit einem jeweiligen Streifen 13 bzw. einer Materialbahn 28 gebracht und mit diesem bzw. dieser verbunden. Im Falle einer Materialbahn 28 kann diese in Transportrichtung nachfolgend an das Verbindungsorgan 27 durch eine geeignete Schneideeinrichtung in eine Vielzahl von Streifen 13 getrennt werden.

## Patentansprüche

1. Füllmaterial (10) für Tropfkörper zur Behandlung von Fluiden, insbesondere zur biologischen Reinigung von Abwasser (12), mit einer Vielzahl von Streifen (13) aus Kunststoff, die auf wenigstens einer Seite mindestens einen zugaufnehmenden Strang (22) aufweisen, **dadurch gekennzeichnet, daß** der oder jeder zugaufnehmende Strang (22) eine Verstärkung aufweist.

2. Füllmaterial nach Anspruch 1, **dadurch gekennzeichnet, daß** die Verstärkung im zugaufnehmenden Strang (22), insbesondere im Inneren des zugaufnehmenden Strangs, angeordnet ist.

3. Füllmaterial nach Anspruch 1 oder 2, **dadurch gekennzeichnet, daß** der zugaufnehmende Strang (22) aus mindestens einem Verstärkungsstrang (23) und einer Umhüllung (24) gebildet ist, die vorzugsweise in Bezug auf ihren Querschnitt konstante Wandstärke aufweist.

4. Füllmaterial nach einem der vorstehenden Ansprüche, **dadurch gekennzeichnet, daß** der Verstärkungsstrang (23) einen im wesentlichen kreisförmigen Querschnitt aufweist, und/oder der Außenquerschnitt der Umhüllung (24) im wesentlichen kreisförmig ausgebildet ist.

5. Füllmaterial nach Anspruch 4, **dadurch gekennzeichnet, daß** die Wandstärke der Umhüllung (24) ungefähr das 0,5 bis 1-fache des Durchmessers des Verstärkungsstrangs (23) betätigt.

6. Füllmaterial nach einem der vorstehenden Ansprüche, **dadurch gekennzeichnet, daß** jeder Strang (22) mit seiner Umhüllung (24) mit dem jeweiligen Streifen (13) verbunden ist, vorzugsweise durch Verschweißen, Versiegeln und/oder Verkleben.

7. Füllmaterial nach einem der vorstehenden Ansprüche, **dadurch gekennzeichnet, daß** der Verstärkungsstrang (23), insbesondere jeder Verstärkungsstrang (23) aus einem hochzugfesten Material gebildet ist, insbesondere aus einem Kohle- oder Glasfaserstrang oder einem Bündel aus Kohle- oder Glasfasersträngen besteht.

8. Füllmaterial nach einem der vorstehenden Ansprüche, **dadurch gekennzeichnet, daß** der zugaufnehmende Strang (22) etwa mittig auf mindestens einer Seite jedes Streifens (13) angeordnet ist.

9. Füllmaterial nach einem der vorstehenden Ansprüche, **dadurch gekennzeichnet, daß** die Umhüllung mindestens teilweise aus einem schaumförmigen bzw. geschäumten Material besteht, vorzugsweise aus geschäumtem Polyäthylen.

10. Verfahren zur Herstellung von Füllmaterial (10) für Tropfkörper zur Behandlung von Fluiden, insbesondere zur biologischen Reinigung von Abwasser (12), mit einer Vielzahl von mit Streifen (13), die jeweils mit mindestens einem zugaufnehmenden Strang (22) verbunden werden, insbesondere nach einem der vorhergehenden Ansprüche, **dadurch gekennzeichnet, daß** die Stränge (22) gebildet werden aus einem hochzugfestem Verstärkungsstrang (23) der im Extrusionsverfahren mit einer Umhüllung (24) versehen wird.

## Claims

1. Packing (10) for fluid-treating trickling filters, in particular for the biological purification of sewage (12), with a multiplicity of strips (13) of plastic, which have at least one tension-absorbing strand (22) on at least one side, **characterized in that** the or each tension-absorbing strand (22) has a reinforcement.

2. Packing according to Claim 1, **characterized in that** the reinforcement is arranged in the tension-absorbing strand (22), in particular in the interior of the tension-absorbing strand.

3. Packing according to Claim 1 or 2, **characterized in that** the tension-absorbing strand (22) is formed by at least one reinforcing strand (23) and a sheathing (24), which preferably has a constant wall thickness with respect to its cross section.

4. Packing according to one of the preceding claims, **characterized in that** the reinforcing strand (23) has an essentially circular cross section, and/or the outer cross section of the sheathing (24) is of an essentially circular form.

5. Packing according to Claim 4, **characterized in that** the wall thickness of the sheathing (44) is approximately 0.5 to 1 times the diameter of the reinforcing strand (23).

6. Packing according to one of the preceding claims, **characterized in that** each strand (22) with its sheathing (24) is connected to the respective strip (13), preferably by welding, sealing and/or adhesive bonding.

7. Packing according to one of the preceding claims, **characterized in that** the reinforcing strand (23), in particular each reinforcing strand (23), is formed from a highly tension-resistant material, in particular from a carbon- or glass-fibre strand or a bundle of carbon- or glass-fibre strands.

8. Packing according to one of the preceding claims, **characterized in that** the tension-absorbing strand (22) is arranged approximately centrally on at least one side of each strip (13).

9. Packing according to one of the preceding claims, **characterized in that** the sheathing consists at least partially of a material in foam form or a foamed material, preferably of foamed polyethylene.

10. A process for manufacturing packing (10) for fluid-treating trickling filters, in particular for the biological purification of sewage (12), with a multiplicity of strips (13), which are in each case connected to at least one tension-absorbing strand (22), in particular according to one of the preceding claims, **characterized in that** the strands (22) are formed from a highly tension-resistant reinforcing strand (23) which is provided with a sheathing (24) in the extrusion process.

## Revendications

1. Garnissage (10) de filtres à dégouttement pour le traitement de fluides, en particulier pour l'épuration biologique des eaux usées (12), comprenant une pluralité de bandes (13) en matière synthétique qui présentent sur au moins un côté au moins un boyau (22) absorbant la traction, **caractérisé en ce que** le ou chaque boyau (22) absorbant la traction présente un renfort.

2. Garnissage selon la revendication 1, **caractérisé en ce que** le renfort est disposé dans le boyau (22) absorbant la traction, en particulier à l'intérieur du boyau absorbant la traction.

3. Garnissage selon la revendication 1 ou 2, **caractérisé en ce que** le boyau (22) absorbant la traction est formé au moins d'un boyau de renfort (23) et d'une enveloppe (24) qui présente de préférence, pour ce qui est de sa section transversale, une épaisseur de paroi constante.

4. Garnissage selon une des revendications précédentes, **caractérisé en ce que** le boyau de renfort (23) présente une section transversale de forme essentiellement circulaire et / ou la section transversale extérieure de l'enveloppe (24) est de forme essentiellement circulaire.

5. Garnissage selon la revendication 4, **caractérisé en ce que** l'épaisseur de paroi de l'enveloppe (24) représente environ 0,5 à 1 fois le diamètre du boyau de renfort (23).

6. Garnissage selon une des revendications précédentes, **caractérisé en ce que** chaque boyau (22) avec son enveloppe (24) est relié avec la bande (13) concernée, de préférence par soudage, scellement et / ou collage.

7. Garnissage selon une des revendications précédentes, **caractérisé en ce que** le boyau de renfort (23), en particulier chaque boyau de renfort (23), est formé d'une matière ayant une grande résistance à la traction, est constitué, en particulier, d'un boyau en fibres de carbone ou fibres de verre ou un faisceau de boyaux de fibres de carbone ou fibres de verre.

8. Garnissage selon une des revendications précédentes, **caractérisé en ce que** le boyau (22) absorbant la traction est disposé à peu près au centre sur au moins un côté de chaque bande (13).

9. Garnissage selon une des revendications précédentes, **caractérisé en ce que** l'enveloppe est constituée au moins en partie d'une matière en forme de mousse ou transformée en mousse, de préférence de mousse polyéthylène.

10. Procédé pour la fabrication de garnissage (10) pour des filtres à dégouttement pour le traitement de fluides, en particulier pour l'épuration biologique d'eaux usées (12), comprenant une pluralité de bandes (13) qui sont respectivement reliées à au moins un boyau (22) absorbant la traction, en particulier selon une des revendications précédentes, **caractérisé en ce que** les boyaux (22) sont formés d'un boyau de renfort (23) ayant une grande résistance à la traction qui est pourvu d'une enveloppe au cours du procédé d'extrusion.
